# EUROPÄISCHE PATENTSCHRIFT

(11) **EP 3 780 200 B1**
(45) Veröffentlichungstag und Bekanntmachung des Hinweises auf die Patenterteilung: **21.07.2021**
(21) Anmeldenummer: 19192060.2
(22) Anmeldetag: 16.08.2019
(51) Int. Cl.: H01M 8/0228, H01M 8/0245, H01M 8/0206, H01M 8/0215, H01M 8/0256, C25B 11/04, C25B 9/00, C25B 9/73

(54) **BESCHICHTUNG, VERTEILERPLATTE, BRENNSTOFFZELLE UND VERFAHREN ZUR BESCHICHTUNG**
COATING, DISTRIBUTION PLATE, FUEL CELL AND COATING METHOD
REVÊTEMENT, PLAQUE DE DISTRIBUTEUR, PILE À COMBUSTIBLE ET PROCÉDÉ DE REVÊTEMENT

(43) Veröffentlichungstag der Anmeldung: 17.02.2021
(73) Patentinhaber: Höfler, Sven, 78315 Radolfzell (DE); Kober, Jochen, 72639 Neuffen (DE)
(72) Erfinder: Höfler, Sven, 78315 Radolfzell (DE); Kober, Jochen, 72639 Neuffen (DE)
(74) Vertreter: Kohler Schmid Möbus Patentanwälte

(56) Entgegenhaltungen:
- CN-A- 107 681 173
- DE-A1-102009 037 147
- US-A1- 2007 298 309
- US-A1- 2010 273 095

## Beschreibung

Die Erfindung geht aus von einer Beschichtung für ein zu beschichtendes Substrat einer Verteilerplatte, beispielsweise einer Elektrolysevorrichtung, einer Brennstoffzelle und/oder eines elektrochemischen Energiespeichers.

Beispielsweise zum Aufbau von Stapeln von Brennstoffzellen, insbesondere mit polymeren Festelektrolyten, werden derartige Verteilerplatten zusammen mit Membran-Elektroden-Anordnungen (MEA) angeordnet. Üblicherweise weisen die Verteilerplatten Kanalstrukturen auf, entlang derer im Betrieb der Brennstoffzellen bzw. des Brennstoffzellenstapels Prozessgase, insbesondere Wasserstoff und Sauerstoff, entlang strömen und den MEA zugeführt und/oder abgeführt werden.

Eine Verteilerplatte weist üblicherweise ein plattenförmiges Substrat auf, das üblicherweise aus Titan ausgebildet ist. Zur Vermeidung von Korrosion ist das Substrat mit einer Edelmetallbeschichtung versehen. Aufgrund der verwendeten Materialien ist die Herstellung einer solchen Verteilerplatte sehr kostenintensiv.

Aus der DE 11 2006 000 345 T5 ist eine Verteilerplatte mit einem mit einer Sol-Gel-Schicht beschichteten Substrat bekannt. Durch die Sol-Gel-Schicht wird das darunterliegende Substrat gegen Korrosion geschützt, sodass neben Titan auch weniger korrosionsbeständige Materialien, wie beispielsweise Aluminium, als Substratmaterial vorgesehen werden können. Die Beschichtung besteht aus einem leitfähigen Material und einem hydrophilen Material. Beide Materialien sind gleichzeitig abzuscheiden. Die Beschichtung ist dadurch nur schwierig herstellbar. Ferner besteht das Risiko, dass die Sol-Gel-Schicht durch aggressive Stoffe unterwandert wird, sodass das Substrat trotz der Sol-Gel-Schicht korrodiert, was wiederum zu einer Reduktion der Lebensdauer führt.

Aus der CN 107 681 173 A ist eine Oberflächenbeschichtung für eine metallische Verteilerplatte bekannt, bei der außenseitig zur Reduktion des Kontaktwiderstandes zwischen der Verteilerplatte und einer Gasdiffusionsschicht eine Vielzahl von Punkten aus einem Edelmetall aufgebracht ist.

Eine weitere Oberflächenbeschichtung einer Verteilerplatte ist aus der US 2010/273095 A1 bekannt.

Ein Kontaktelement zur Stromaufnahme und Stromableitung in stromerzeugenden elektrochemischen Zellen wird in der DE 10 2009 037 147 A1 beschrieben.

Ferner offenbart die US 2007 / 298 309 A1 kostengünstige Beschichtungen für Verteilerplatten.

Zur Erreichung langer Lebensdauern und hoher Wirkungsgrade müssen Beschichtungen für kostengünstigere Substratmaterialien wie Stahl, Edelstahl, Aluminium oder einem Buntmetall einer Vielzahl von physikalischen und chemischen Randbedingungen genügen. Insbesondere müssen sie elektrisch leitend sein und dürfen ihre elektrische Leitfähigkeit auch im Dauereinsatz nicht verlieren. Sie sollten einen geringen Kontaktwiderstand aufweisen. Die Beschichtung darf keine Lokalelemente mit dem Substratmaterial bilden. Insbesondere darf es nicht zu Lochfraß und Filiformkorrosion kommen. Die Beschichtung sollte in einem weiten pH-Bereich einsetzbar sein. Sie sollte insbesondere säurestabil sein. Desgleichen sollten sich die Beschichtung bzw. Teile der Beschichtung nicht auflösen. Auch darf es, insbesondere bei metallischen Oberflächen, nicht zu Zementationsreaktionen kommen.

Die Beschichtung sollte bis zu einem Potential von 2 V, insbesondere im Bereich von 1,0 V bis 1,8 V relativ zu Wasserstoff oder zu der jeweiligen Gegenelektrode anodisch stabil sein. Sie sollte auch im Kontakt mit einer Gasdiffusionselektrode der Brennstoffzelle keine Gegenpotentiale zur Gesamtspannung der Brennstoffzelle bilden.

Aufgabe der vorliegenden Erfindung ist es daher, eine Beschichtung für ein zu beschichtendes Substrat einer Verteilerplatte und eine Verteilerplatte anzubieten, die es erlauben, eine Elektrolysevorrichtung, eine Brennstoffzelle und/oder einen elektrochemischen Energiespeicher mit langen Lebensdauern und hohen Wirkungsgraden kostengünstig herzustellen. Auch sollte eine kostengünstige Brennstoffzelle mit hohem Wirkungsgrad und langer Lebensdauer bereitgestellt werden. Ferner ist es Aufgabe der Erfindung, ein Verfahren zur Beschichtung eines Substrats einer Verteilerplatte anzubieten, das eine kostengünstige Herstellung einer Elektrolysevorrichtung, einer Brennstoffzelle und/oder eines elektrochemischen Energiespeichers mit langen Lebensdauern und hohen Wirkungsgraden ermöglicht.

Gelöst wird die Aufgabe durch eine Beschichtung für ein zu beschichtendes Substrat einer Verteilerplatte, beispielsweise einer Elektrolysevorrichtung, einer Brennstoffzelle und/oder eines elektrochemischen Energiespeichers, wobei die Beschichtung eine Innenseite zur Kontaktierung des Substrats der Verteilerplatte und eine der Innenseite abgewandte Außenseite aufweist, umfassend eine Sol-Gel-Schicht, wobei die Sol-Gel-Schicht eine Vielzahl durch sie hindurch reichender, elektrisch leitender Durchkontaktierungen aufweist, wobei wenigstens eine der Durchkontaktierungen auf einer der Außenseite zugewandten Seite der Sol-Gel-Schicht mit einer edelmetallhaltigen Schutzschicht abgedeckt ist und wobei die wenigstens eine der Durchkontaktierungen mit einer Kontaktvermittlungsschicht elektrisch leitend verbunden und mit dem Substrat über die Kontaktvermittlungsschicht elektrisch leitend verbunden ist.

Erfindungsgemäß ist es demnach vorgesehen, die Korrosionsbeständigkeit eines mit der Beschichtung beschichteten Substrats durch eine Sol-Gel-Schicht zu verbessern. Dadurch lassen sich auch kostengünstigere, jedoch weniger korrosionsbeständige Substratmaterialien wie Aluminium, Edelstahl, Stahl oder ein Buntmetall verwenden. Da die Sol-Gel-Schicht wiederum elektrisch nicht leitfähig sein kann bzw. einen hohen spezifischen elektrischen Widerstand aufweisen kann, ist eine Vielzahl durch die Sol-Gel-Schicht hindurchreichender elektrisch leitender Durchkontaktierungen vorgesehen. Durch diese Kombination der Sol-Gel-Schicht mit den Durchkontaktierungen lassen sich im Wesentlichen die gleichen Effekte hinsichtlich der Schutzwirkung und der elektrischen Leitfähigkeit erreichen wie bei einer vollflächigen Edelmetallschicht. Da auf eine vollflächige Edelmetallschicht verzichtet werden kann, lassen sich Kosten einsparen. Die Durchkontaktierungen sind zur Verbesserung ihrer eigenen Korrosionsbeständigkeit mit einer edelmetallhaltigen Schutzschicht außenseitig abgedeckt. Ferner ist eine Kontaktvermittlungsschicht vorgesehen. Diese befindet sich im Bereich der wenigstens einen der Durchkontaktierungen und optional auch außerhalb dieses Bereichs bzw. dieser Bereiche. Über die Kontaktvermittlungsschicht lässt sich ein elektrischer Kontakt zwischen dem Substrat und der Beschichtung, insbesondere wenigstens einer der Durchkontaktierungen, herstellen und/oder verbessern.

Die Kontaktvermittlungsschicht kann eingerichtet sein, die Haftung der Beschichtung am Substrat zu verbessern. Somit wird eine Unterwanderung der Beschichtung durch aggressive Stoffe verhindert und die Langlebigkeit weiter verbessert. Die Beschichtung kann insbesondere bei Brennstoffzellen mit Prozessfluiden basierend auf Ammoniak, Methanol, Wasserstoff und/oder Sauerstoff eingesetzt werden.

Insbesondere ist die erfindungsgemäße Beschichtung in einem pH-Bereich von 0 - 13 einsetzbar. Die Beschichtung kann auf beiden Seiten des Substrats vorgesehen sein.

Denkbar ist auch eine Verbesserung der thermischen Leitfähigkeit zwischen dem Substrat und der Beschichtung durch die Kontaktvermittlungsschicht.

Ein weiterer Vorteil ergibt sich daraus, dass das mit der Beschichtung beschichtete Substrat in Grenzen weiter, insbesondere elastisch, verformbar bleiben kann. Insbesondere kann das beschichtete Substrat weiterhin flexibel bleiben, ohne dass es zu einem Abplatzen der Beschichtung, zu einer Rissbildung in der Beschichtung und/oder dergleichen kommt. Die Bildung korrosionsfördernder Fehlstellen während eines leichten Verbiegens des beschichteten Substrats lassen sich somit vermeiden.

Wenigstens eine der Durchkontaktierungen kann im Querschnitt kreisförmig, quadratisch, sternförmig oder dergleichen ausgebildet sein.

Die Durchkontaktierungen können eine zylindrische oder zumindest eine im Wesentlichen zylindrische Form aufweisen. Alternativ können sie sich verjüngen, insbesondere trichterförmig oder zumindest im Wesentlichen trichterförmig ausgebildet sein. Vorzugsweise sind sie vollständig mit wenigstens einem elektrisch leitfähigen Material gefüllt.

Die Sol-Gel-Schicht kann eine Dicke von 1 bis 25 µm aufweisen.

Die Beschichtung kann an ihrer Außenseite wenigstens bereichsweise zur Sol-Gel-Schicht hin eine zusätzliche Sol-Gel-Außenschicht aufweisen. Die Sol-Gel-Außenschicht kann dazu eine Dicke im Bereich von 0,3 bis 5 µm, insbesondere 2 bis 4 µm, beispielsweise ca. 2 µm aufweisen. Durch eine solche zusätzliche Sol-Gel-Außenschicht können Grenzbereiche zwischen der Sol-Gel-Schicht und einzelnen Durchkontaktierungen an der der Außenseite zugewandten Oberfläche abgedeckt und damit geschützt werden. So kann beispielsweise ein Kriechen aggressiver Stoffe entlang der Ränder der Durchkontaktierungen vermieden werden. Die Langlebigkeit einer Verteilerplatte lässt sich somit weiter steigern.

Das Grundmaterial der Sol-Gel-Schicht und/oder das Grundmaterial der Sol-Gel-Außenschicht können SiO₂, HfO₂, ZrO₂, Al₂O₃, SnO₂, Ta₂O₅, Nb₂O₅, TᵢO₂, MoO₂, IrO₂ und/oder RuO₂ oder dergleichen aufweisen. Auf solchen Grundmaterialien basierende Sol-Gel-Schichten bzw. Sol-Gel-Außenschichten weisen eine hochgradige Säure- und/oder Temperaturstabilität und/oder eine sehr gute Alkalibeständigkeit auf.

Allgemein ist denkbar, dass die Sol-Gel-Schicht elektrisch leitfähig ist. Alternativ ist auch denkbar, dass die Sol-Gel-Schicht nicht elektrisch leitfähig ist.

Die elektrische Leitfähigkeit der Sol-Gel-Schicht lässt sich verbessern, wenn die Sol-Gel-Schicht elektrisch leitfähige Partikel aufweist. Insbesondere kann die Sol-Gel-Schicht silberhaltige Partikel und/oder Kohlenstoffpartikel aufweisen.

Denkbar ist auch, dass die Sol-Gel-Außenschicht elektrisch leitfähige Partikel aufweist. Insbesondere kann die Sol-Gel-Außenschicht goldhaltige Partikel aufweisen.

Die Schutzschicht wenigstens einer der Durchkontaktierungen kann Gold, Ruthenium, Rhodium, Platin, Iridium, Palladium, Osmium und/oder eine Legierung mit wenigstens einem dieser Metalle aufweisen. Allgemein kann die Schutzschicht aus einem hochgradig korrosionsbeständigen Material ausgebildet sein. Die Schutzschicht kann galvanisch, chemisch und/oder mittels Pulse Plating aufgebracht sein. Die Dicke der Schutzschicht kann zwischen 0,1 µm und 6 µm, insbesondere höchstens 4 µm, betragen. Die Schutzschicht kann eine große Rauigkeit aufweisen. Dadurch kann der Kontaktwiderstand verringert werden.

Da lediglich ein geringer Anteil der der Außenseite zugewandten Oberfläche der Beschichtung mit der Schutzschicht abgedeckt ist, lässt sich der Materialaufwand an kostenträchtigen Edelmetallen bzw. Edelmetalllegierungen reduzieren. Daher lassen sich bei vertretbarem Kostenaufwand Materialien einsetzen, die eine besonders hochgradige Korrosionsbeständigkeit wie eben die genannten Materialien aufweisen.

Wenigstens eine der Durchkontaktierungen kann Silber, Nickel, Kupfer, Zink, Palladium, Platin und/oder eine Legierung mit wenigstens einem dieser Metalle aufweisen. Als Legierungen können insbesondere Cu-Ni, Zn-Ni, Zn-Cu-Ni vorgesehen sein. Das Material kann galvanisch, insbesondere auf die Kontaktvermittlungsschicht, aufgebracht sein. Werden Kupfer und Nickel kombiniert, so kann vorzugsweise vorgesehen sein, dass eine Nickelschicht in Richtung der Außenseite und eine Kupferschicht in Richtung der Innenseite innerhalb der Durchkontaktierung angeordnet ist.

Zumindest bereichsweise kann die Kontaktvermittlungsschicht eine Zinkschicht, eine Eloxalschicht und/oder eine kupferbasierte Schicht aufweisen.

Eine Zinkschicht kann durch eine Zinkatbeize aufgetragen werden.

Durch die Zinkschicht lassen sich die Haftung und die elektrische Leitfähigkeit zwischen dem Substrat, insbesondere wenn es aluminiumbasiert ist, und der Durchkontaktierung sowie der Sol-Gel-Schicht verbessern.

Sowohl zur Verbesserung der Haftung als auch zum Ausgleich unterschiedlicher Temperaturkoeffizienten der Materialien kann alternativ oder ergänzend die Eloxalschicht vorgesehen sein.

Die elektrische Leitfähigkeit zwischen dem Substrat, insbesondere wenn es aluminiumbasiert ist, und den Durchkontaktierungen lässt sich durch die kupferbasierte Schicht verbessern. Die kupferbasierte Schicht kann durch Plattieren des Substrats hergestellt sein.

Die Durchkontaktierungen können wenigstens 3 Prozent und höchstens 80 Prozent der außenseitigen Oberfläche der Sol-Gel-Schicht einnehmen. Die Durchkontaktierungen können insbesondere wenigstens 5 Prozent einnehmen. Vorzugsweise nehmen die Durchkontaktierungen höchstens 60 Prozent, besonders bevorzugt höchstens 8 Prozent der Oberfläche ein.

Somit kann auf eine vollflächige Beschichtung mit teuren Edelmetallen bzw. Edelmetalllegierungen verzichtet werden, gleichzeitig kann jedoch weiterhin eine ausreichende elektrische Leitfähigkeit sichergestellt werden.

In den Rahmen der Erfindung fällt des Weiteren eine Verteilerplatte einer Elektrolysevorrichtung, einer Brennstoffzelle und/oder eines elektrochemischen Energiespeichers, wobei die Verteilerplatte ein Substrat umfasst, das wenigstens bereichsweise eine erfindungsgemäße Beschichtung aufweist. Eine solche Verteilerplatte weist eine hohe Lebensdauer und eine hohe elektrische Leitfähigkeit auf. Die Verteilerplatte kann beispielsweise eine Elektrode oder zumindest ein Teil einer Elektrode eines Akkumulators sein.

Das Substrat kann insbesondere aluminiumbasiert sein. Dazu kann es insbesondere Aluminium und/oder Aluminiumoxid enthalten. Ein solches Substrat ist kostengünstig verfügbar und/oder einfach verarbeitbar. Es weist eine hohe elektrische und thermische Leitfähigkeit auf. Ferner zeichnet es sich durch ein geringes spezifisches Gewicht aus.

Alternativ oder ergänzend kann das Substrat Edelstahl, Stahl und/oder ein Buntmetall aufweisen. Auch diese Materialien sind im hiesigen Raum kostengünstig und in ausreichender Menge verfügbar.

Des Weiteren fällt in den Rahmen der Erfindung eine Brennstoffzelle, die wenigstens eine erfindungsgemäße Verteilerplatte aufweist. Eine solche Brennstoffzelle kann eine besonders hohe Lebensdauer und einen guten Wirkungsgrad aufweisen. Die Erfindung ist nicht auf einen spezifischen Brennstoffzellentyp beschränkt. Beispielsweise kann es sich um eine Brennstoffzelle mit wenigstens einem polymeren Festelektrolyten handeln.

Weiter fällt in den Rahmen der Erfindung ein Verfahren zur Beschichtung eines Substrats einer Verteilerplatte, beispielsweise einer Elektrolysevorrichtung, einer Brennstoffzelle und/oder eines elektrochemischen Energiespeichers, mit einer Beschichtung, insbesondere einer erfindungsgemäßen Beschichtung, umfassend die Schritte:
a) Aufbringen einer Kontaktvermittlungsschicht auf das Substrat
b) Aufbringen einer Sol-Gel-Schicht auf das Substrat und/oder die Kontaktvermittlungsschicht und
c) Herstellen von Durchkontaktierungen durch die Sol-Gel-Schicht, wobei wenigstens eine der Durchkontaktierungen auf einer der Außenseite zugewandten Seite der Sol-Gel-Schicht mit einer edelmetallhaltigen Schutzschicht abgedeckt ist und wobei die wenigstens eine der Durchkontaktierungen mit der Kontaktvermittlungsschicht elektrisch leitend verbunden und mit dem Substrat über die Kontaktvermittlungsschicht elektrisch leitend verbunden ist.

Die Reihenfolge dieser Schritte a), b), c) kann frei wählbar sein. In einer bevorzugten Variante des Verfahrens kann als Abfolge erstens Schritt a), zweitens Schritt b) und drittens Schritt c) gewählt sein.

Durch das Verfahren wird es möglich, auf einfache und kostengünstige Weise ein Substrat mit hoher Lebensdauer herzustellen. Gleichzeitig kann das hergestellte Substrat eine hohe elektrische Leitfähigkeit aufweisen.

Weiter kann vorgesehen sein, dass auf die Sol-Gel-Schicht außenseitig zumindest bereichsweise noch eine Sol-Gel-Außenschicht aufgebracht wird.

Ein weiterer Verfahrensschritt kann vorsehen, dass die Schutzschicht wenigstens einer der Durchkontaktierungen temporär abgedeckt wird. Die Abdeckung kann beispielsweise mit einem Schutzlack erfolgen. Somit kann vermieden werden, dass bei einem nachfolgenden Aufbringen der Sol-Gel-Außenschicht die edelmetallhaltige Schutzschicht von der Sol-Gel-Außenschicht bedeckt wird. Somit bleibt die hohe elektrische Leitfähigkeit der edelmetallhaltigen Schutzschicht zur Außenseite hin und damit beispielsweise zu einer Gasdiffusionsschicht, zu einer benachbarten Membran und/oder zu einem Elektrolyten hin, an die bzw. an den das beschichtete Substrat bzw. die Verteilerplatte grenzen, erhalten.

Alternativ oder ergänzend kann zu diesem Zweck vorgesehen sein, dass die Schutzschicht wenigstens einer der Durchkontaktierungen, insbesondere an der der Außenseite zugewandten Seite, von Fremdstoffen und/oder der Sol-Gel-Außenschicht befreit wird.

In Schritt a) können eine Zinkschicht, eine Eloxalschicht und/oder eine kupferbasierte Schicht aufgebracht werden. Beispielsweise kann das Substrat mit Kupfer plattiert werden. Somit lassen sich Hafteigenschaften der Beschichtung auf dem Substrat und/oder die elektrische Leitfähigkeit zwischen dem Substrat und der Beschichtung, insbesondere wenigstens einer der Durchkontaktierungen der Beschichtung, verbessern.

Der Grundstoff der Sol-Gel-Schicht und/oder die Sol-Gel-Schicht können mit einer Vielzahl leitfähige Partikel versetzt werden. Somit kann die Sol-Gel-Schicht, insbesondere in ausgehärtetem Zustand, eine Vielzahl leitfähiger Partikel aufweisen. Als leitfähige Partikel können beispielsweise Silber-Partikel und/oder Kohlenstoff-Partikel verwendet werden. Somit lässt sich auch die elektrische Leitfähigkeit der Sol-Gel-Schicht selbst verbessern.

Zur Herstellung der Durchkontaktierungen können in die Sol-Gel-Schicht Löcher eingebracht werden. Dies kann beispielsweise durch mechanisches Bohren erfolgen. Alternativ oder ergänzend ist auch denkbar, die Löcher Laser-basiert herzustellen.

Bei einer Variante des Verfahrens ist vorgesehen, zunächst auf der Kontaktvermittlungsschicht die spätere Füllung der Durchbrüche aufzubauen, um dann anschließend die Sol-Gel-Schicht um diese Füllungen herum zu bilden.

Insbesondere ist denkbar, dass die Durchkontaktierungen gemäß Schritt c) vor der Herstellung der Sol-Gel-Schicht gemäß Schritt b) hergestellt werden. Insbesondere bei einem solchen Vorgehen ist es denkbar, zunächst auf die edelmetallhaltigen Schutzschichten der Durchkontaktierungen einen Schutzlack aufzubringen. Anschließend kann die Sol-Gel-Schicht aufgebaut werden. Gegebenenfalls kann anschließend die Sol-Gel-Außenschicht aufgebracht werden. Durch den Schutzlack ist sichergestellt, dass die edelmetallhaltigen Schutzschichten frei von der Sol-Gel-Schicht bzw. -Außenschicht bleiben. Somit genügt ein abschließender Schritt, bei dem der Schutzlack wieder entfernt wird.

Erfindungsgemäß lassen sich im Vergleich zu bisher bekannten Verteilerplatten aus beispielsweise Titan oder Stahl deutliche Gewichts- und/oder Volumenreduktionen erzielen. Außerdem lässt sich die Wärmeableitung deutlich verbessern, insbesondere, wenn Aluminium als Substratmaterial verwendet wird.

Durch die Beschichtung kann eine Vergiftung einer an die Verteilerplatte angrenzenden MEA vermieden werden, insbesondere da sich durch die Beschichtung eine Abgabe von 2- und/oder 3-wertigen metallischen Kationen verhindern lässt.

Die Beschichtung lässt sich außer für Wasserstoff diffusionsdicht ausbilden. Durch die Beschichtung können insbesondere alle relevanten Kanten des Substrats abgedeckt sein.

Die Beschichtung lässt sich in Serienfertigung und insbesondere großflächig herstellen.

Ihre Korrosionsstromdichte kann weniger als 10⁻⁶ A/cm² betragen, insbesondere im Bereich von 0,002 µA/cm² liegen.

Mit einer solchen Verteilerplatte lassen sich Brennstoffzellen herstellen, deren polymere Festelektrolyten spezifische Leistungen von bis zu 5 W/cm² erreichen.

Durch die Durchkontaktierungen kann die Beschichtung an ihrer Außenseite eine Mikrostrukturierung und damit insbesondere eine definierte Oberflächenrauheit aufweisen. Dadurch kann die Kontaktfläche zu beispielsweise einer angrenzenden Gasdiffusionsschicht vergrößert werden. Übergangswiderstände können somit minimiert werden.

Insbesondere lassen sich somit herstellungsbedingte Unebenheiten der Verteilerplatte kompensieren.

Denkbar ist auch, die Durchkontaktierungen geeignet zu formen und/oder zu verteilen. Dann kann beispielsweise in einer Brennstoffzelle die Gasverteilung verbessert werden, da die Prozessgase direkt über ein aus den Durchkontaktierungen mehrerer, aneinander angrenzender Verteilerplatten gebildetes, insbesondere Labyrinth-artiges, System verteilt werden können.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine Verteilerplatte in perspektivischer Darstellung;
- Fig. 2: eine Detailansicht eines Teilstücks der Verteilerplatte gemäß Fig. 1 in perspektivischer Darstellung;
- Fig. 3: eine schematische Schnittansicht durch eine Verteilerplatte mit einer ersten Beschichtung;
- Fig. 4: eine schematische Schnittansicht durch eine Verteilerplatte mit einer zweiten Beschichtung;
- Fig. 5: eine schematische Schnittansicht durch eine Verteilerplatte mit einer dritten Beschichtung;
- Fig. 6: eine schematische Schnittansicht durch eine Verteilerplatte mit einer vierten Beschichtung und
- Fig. 7: ein Ablaufdiagramm eines Verfahrens zur Herstellung einer Beschichtung.

Zur Erleichterung des Verständnisses der Erfindung sind in der nachfolgenden Figurenbeschreibung jeweils funktional sich entsprechenden Elementen gleiche Bezugszeichen zugeordnet.

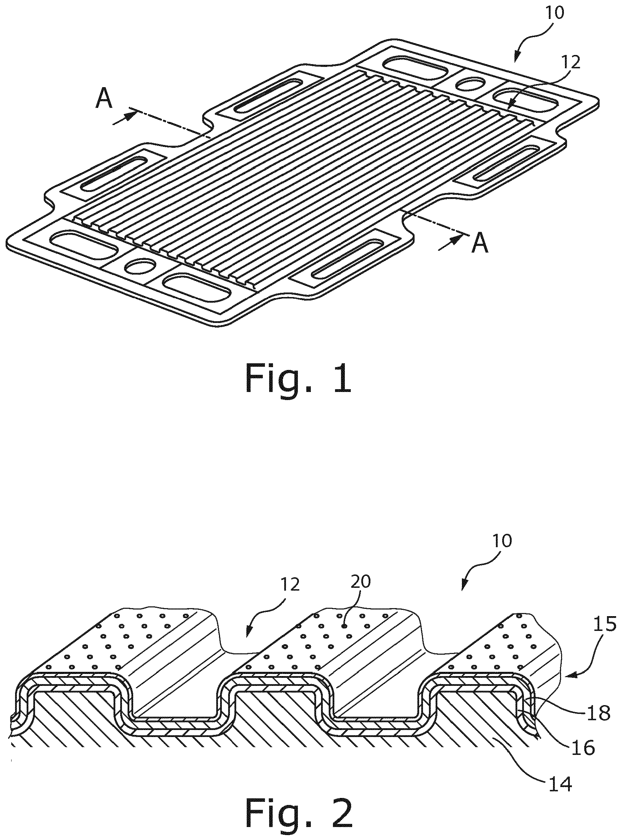

**Fig. 1** zeigt eine Verteilerplatte **10** einer Brennstoffzelle. Zu erkennen ist, dass die Verteilerplatte 10 eine Vielzahl von Kanalvertiefungen **12** aufweist, durch die Kanäle ausbildbar sind, entlang derer während des Betriebs der mit der Verteilerplatte 10 bestückten Brennstoffzelle Prozessgase, beispielsweise Wasserstoff oder Sauerstoff, strömen.

Der Aufbau der Verteilerplatte 10 ist aus **Fig. 2** erkennbar, die eine Detailansicht eines entlang der Schnittlinie **A-A** (Fig. 1) abgetrennten Teilstücks der Verteilerplatte 10 in perspektivischer Darstellung zeigt.

Zu erkennen ist ein Substrat **14.** Das Substrat 14 ist aus Aluminium gebildet. Durch das Substrat 14 sind die Kanalvertiefungen 12, von denen in Fig. 2 beispielhaft eine Kanalvertiefung 12 mit einem Bezugszeichen versehen ist, ausgebildet.

Das Substrat 14 ist mit einer Beschichtung **15** beschichtet. Dazu sind auf dem Substrat 14 eine Kontaktvermittlungsschicht **16** und darüber eine Sol-Gel-Schicht **18** aufgebracht. In die Sol-Gel-Schicht 18 ist eine Vielzahl von Durchkontaktierungen **20** eingearbeitet, von denen in Fig. 2 lediglich eine Durchkontaktierung 20 mit einem Bezugszeichen versehen ist.

Wie noch weiter unten näher erläutert wird, befindet sich die Kontaktvermittlungsschicht 16 insbesondere zwischen den Durchkontaktierungen 20 und dem Substrat 14. Außerhalb der Bereiche, in denen die Durchkontaktierungen 20 an das Substrat 14 (mittelbar) grenzen, ist die Kontaktvermittlungsschicht 16 optional. Auf eine Kontaktvermittlungsschicht 16 außerhalb dieser Bereiche kann insbesondere verzichtet werden, wenn das Substrat 14 eine große Oberflächenrauigkeit aufweist.

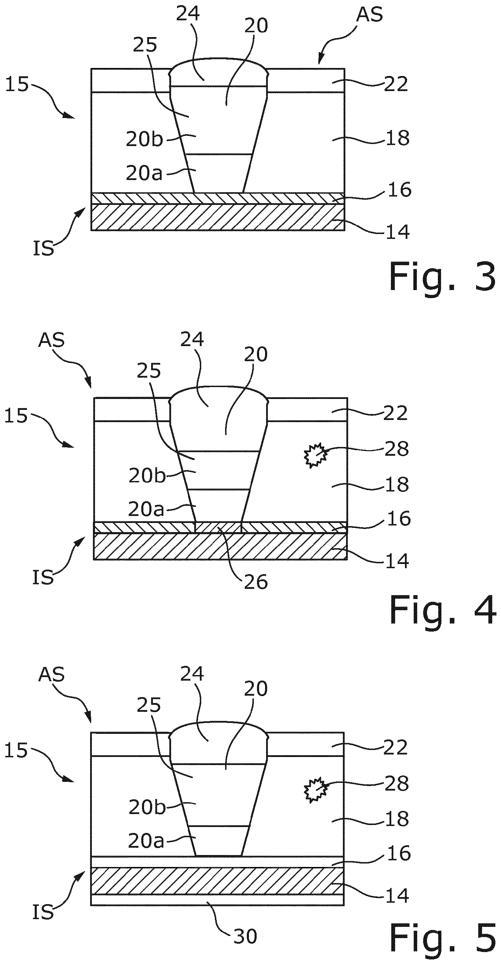

**Fig. 3, Fig. 4, Fig. 5** und **Fig. 6** zeigen nun in schematischen Schnittansichten alternative Ausführungsformen der auf das Substrat 14 aufgebrachten Beschichtung 15. Das Substrat 14 ist in diesen Ausführungsbeispielen aus Aluminium ausgebildet.

Die Beschichtung 15 weist jeweils eine Außenseite **AS** und eine Innenseite **IS** auf. Mit seiner Innenseite IS kontaktiert die Beschichtung 15 das Substrat 14. Somit schützt die Beschichtung 15 das Substrat 14 gegen äußere Einflüsse, insbesondere gegen aggressive Stoffe an der Außenseite AS.

Die Beschichtung 15 weist jeweils in der Reihenfolge von der Innenseite IS zur Außenseite AS eine Kontaktvermittlungsschicht 16, eine Sol-Gel-Schicht 18 und eine Sol-Gel-Außenschicht **22** auf. Durch die Sol-Gel-Schicht 18 sowie die Sol-Gel-Außenschicht 22 hindurchreichend sind Durchkontaktierungen 20, von denen in Fig. 3 bis Fig. 6 lediglich jeweils eine Durchkontaktierung 20 dargestellt ist, eingearbeitet.

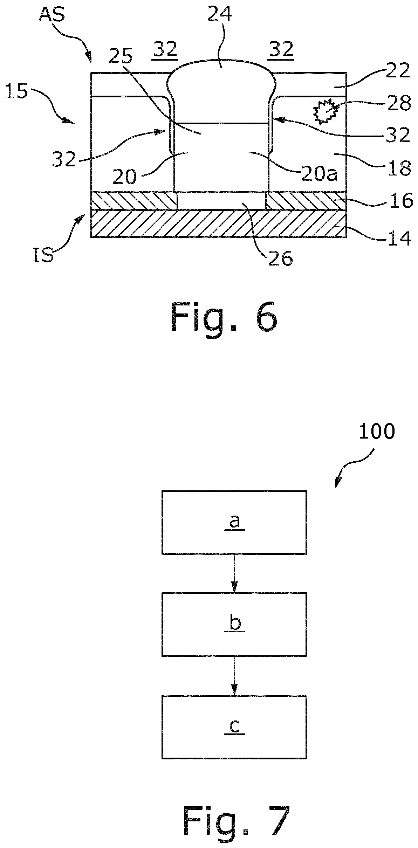

Die Durchkontaktierungen 20 sind in den Ausführungsbeispielen gemäß Fig. 3 bis Fig. 5 trichterförmig ausgebildet, d.h. sie verjüngen sich von der Außenseite AS zur Innenseite IS. Fig. 6 zeigt ein Ausführungsbeispiel mit im Wesentlichen zylindrischen Durchkontaktierungen 20.

An ihrer zur Außenseite AS weisenden Stirnseite weisen die Durchkontaktierungen 20 eine edelmetallhaltige Schutzschicht **24** auf.

Die Schutzschicht 24 ist aus Gold ausgebildet. Sie weist eine Dicke im Bereich von 0,3 µm bis 6 µm auf. Sie bedeckt zur Außenseite AS hin den übrigen Teil der jeweiligen Durchkontaktierung 20, insbesondere einen Innenbereich **25** der Durchkontaktierung 20.

Der Innenbereich 25 und somit die jeweilige Durchkontaktierung 20 sind vollständig gefüllt. Sie weisen eine hohe elektrische Leitfähigkeit auf. Dazu weisen die Innenbereiche 25 der Ausführungsbeispiele gemäß Fig. 3 bis Fig. 5 jeweils eine Kupferschicht **20a** und eine Nickelschicht **20b** auf. Die Kupferschicht 20a ist dabei innenseitig, also auf der zur Kontaktvermittlungsschicht 16 hin weisenden Seite der Beschichtung 15, und die Nickelschicht 20b auf der der Kontaktvermittlungsschicht 16 gegenüberliegenden Seite der Kupferschicht 20a angeordnet. In der Fig. 5 könnte die Kupferschicht 20a auch weggelassen werden.

Im Ausführungsbeispiel gemäß Fig. 6 ist dagegen lediglich die Kupferschicht 20a vorgesehen.

Insbesondere aufgrund der elektrischen Leitfähigkeiten der Schichten 16 (zumindest in den Bereichen der Durchkontaktierungen 20), 20a, 20b ergibt sich somit, dass die Durchkontaktierungen 20 jeweils mit der Kontaktvermittlungsschicht 16 elektrisch leitend verbunden sind. Ferner sind sie über die jeweilige Kontaktvermittlungsschicht 16 mit dem Substrat 14 elektrisch leitend verbunden.

Die Sol-Gel-Schicht 18 sowie die Sol-Gel-Außenschicht 22 sind aus SiO₂ als Grundmaterial ausgebildet. Die Sol-Gel-Schicht 18 weist eine Dicke im Bereich von 1 bis 20 µm auf. Die Sol-Gel-Außenschicht 22 weist eine Dicke von 0,3 bis 3,5 µm auf.

Im Ausführungsbeispiel gemäß Fig. 3 ist die Kontaktvermittlungsschicht 16 als Zinkschicht ausgebildet. Somit ergibt sich eine verbesserte Haftung zwischen der Sol-Gel-Schicht 18 und dem darunterliegenden Substrat 14. Da die Kontaktvermittlungsschicht 16 als Zinkschicht elektrisch leitfähig ist, sind die Durchkontaktierungen 20 elektrisch leitend mit dem darunterliegenden, hier aluminiumbasierten, Substrat 14 verbunden.

In dem Ausführungsbeispiel gemäß Fig. 4 beschränkt sich die Zinkschicht auf einen Kontaktbereich **26** zwischen der Durchkontaktierung 20 und dem Substrat 14. Der übrige Teil der Kontaktvermittlungsschicht 16 ist als Eloxalschicht ausgebildet. Durch die Eloxalschicht ergibt sich wiederum eine verbesserte Haftung der Sol-Gel-Schicht 18 am Substrat 14. Zusätzlich kann die Eloxalschicht als zumindest teilelastische Verbindung zwischen dem Aluminium des Substrats 14 und der SiO₂-haltigen Sol-Gel-Schicht 18 dienen. Dies ermöglicht auch einen Ausgleich unterschiedlicher Temperaturkoeffizienten der verschiedenen Materialien.

Bei dem Ausführungsbeispiel gemäß Fig. 5 ist dagegen die Kontaktvermittlungsschicht 16 als Kupferschicht ausgebildet. Dazu ist das Substrat 14 beidseitig mit Kupfer plattiert worden. Somit sind auf der der Beschichtung 15 zugewandten Seite die Kontaktvermittlungsschicht 16 und auf der der Beschichtung 15 abgewandten Seite des Substrats 14 eine Kontaktschicht **30** aus Kupfer ausgebildet.

Durch die Kupferschichten ergeben sich jeweils hohe elektrische Leitfähigkeiten zu jeweils benachbarten Komponenten, insbesondere auf der Seite der Beschichtung 15 zu den Durchkontaktierungen 20.

Weiter ist in Fig. 4, Fig. 5 und Fig. 6 zu erkennen, dass die Sol-Gel-Schicht 18 in den dortigen Ausführungsbeispielen jeweils mit elektrisch leitfähigen Partikeln **28** versehen ist, wobei wiederum jeweils lediglich ein Partikel 28 dargestellt ist. Die elektrisch leitfähigen Partikel 28 sind Silberpartikel und/oder Kohlenstoffpartikel. Sie erhöhen somit die elektrische Leitfähigkeit der Sol-Gel-Schicht 18.

Es versteht sich, dass - insbesondere zur Einstellung der elektrischen Leitfähigkeit der Sol-Gel-Schicht 18 - derartige leitfähige Partikel 28 auch in den anderen beschriebenen Ausführungsbeispielen, insbesondere bei dem Ausführungsbeispiel gemäß Fig. 3, denkbar sind.

Insbesondere anhand von Fig. 6 ist zu erkennen, dass die Sol-Gel-Außenschicht 22 die Schutzschicht 24 umfangsmäßig umgibt. Somit wird ein Kriechen von potentiell aggressiven Stoffen von der Außenseite AS zum Substrat 14 entlang der Grenzflächen zwischen den Durchkontaktierungen 20 und der diese jeweils umgebenden Sol-Gel-Schicht 18 verhindert. Dabei kann die Sol-Gel-Außenschicht 22 entlang des Rands **32** der Durchkontaktierung 20 eindringen und Fehlstellen ausfüllen und verschließen.

Auch bei diesem Ausführungsbeispiel ist ein Kontaktbereich 26 analog zu dem Ausführungsbeispiel gemäß Fig. 4 vorgesehen.

**Fig. 7** zeigt in einer schematischen Darstellung ein Verfahren **100** zur Beschichtung eines Substrats einer Verteilerplatte. Zur näheren Erläuterung des Verfahrens 100 wird zur Bezeichnung der verschiedenen Komponenten der Beschichtung und des Substrats auf die Bezugszeichen der vorangehenden Fig. 1 bis 6 zurückgegriffen.

Verfahrensgemäß wird in einem Schritt **a)** eine Kontaktvermittlungsschicht 16 auf ein Substrat 14 aufgebracht; dies kann beispielsweise chemisch und/oder galvanisch erfolgen.

In einem Schritt **b)** wird eine Sol-Gel-Schicht 18 auf das Substrat 14 und/oder die Kontaktvermittlungsschicht 16 aufgebracht. Dazu kann im Rahmen eines entsprechenden Sol-Gel-Prozesses durch Hydrolysierung eines Grundmaterials, beispielsweise aus SiO₂, in Gegenwart eines Lösemittels das Sol hergestellt werden. In diesem Stadium besteht noch kein zusammenhängendes Netzwerk aus SiO₂- oder ähnlichen Teilchen. Durch Verdampfen des Lösungsmittels nähern sich die Teilchen im Sol an. Es kommt zu einer Vernetzung einzelner Teilchen durch Kondensation. Somit entsteht ein - noch lösungsmittelgetränktes - Gel. Durch Trocknung des Gels und vollständiges Verdampfen des Lösungsmittels entstehen zusätzliche Quervernetzungen, sodass sich letzten Endes eine feste Schicht ausbildet.

In einem Schritt **c)** werden Durchkontaktierungen 20 durch die Sol-Gel-Schicht 18 hergestellt, wobei wenigstens eine der Durchkontaktierungen 20 auf einer der Außenseite AS zugewandten Seite der Sol-Gel-Schicht 18 mit einer edelmetallhaltigen Schutzschicht 24 abgedeckt ist und wobei die wenigstens eine der Durchkontaktierungen 20 mit der Kontaktvermittlungsschicht 16 elektrisch leitend verbunden und mit dem Substrat 14 über die Kontaktvermittlungsschicht 16 elektrisch leitend verbunden ist. Vorzugsweise sind alle Durchkontaktierungen 20 entsprechend abgedeckt.

Dazu werden Löcher in die Sol-Gel-Schicht 18 beispielsweise gebohrt. Die Löcher werden mit dem jeweiligen Material des Innenbereichs 25, beispielsweise Kupfer und/oder Nickel, aufgefüllt.

Abschließend werden die Durchbrüche 20 galvanisch und/oder chemisch durch Schutzschichten 24 abgedeckt. Dazu wird jeweils eine dünne Schicht aus Gold oder aus einem anderen der vorangehend für die Schutzschicht 24 genannten Materialien, beispielsweise mit einer Dicke von 0,3 µm bis 6 µm, galvanisch und/oder chemisch auf den jeweiligen Innenbereich 25 des jeweiligen Durchbruchs 20 aufgetragen.

Um Fehlstellen und dergleichen zwischen den Durchkontaktierungen 20 und der angrenzenden Sol-Gel-Schicht 18 abzudecken, kann abschließend eine zusätzliche Sol-Gel-Außenschicht 22 auf der der Außenseite AS zugewandten Seite der Beschichtung 15 aufgebracht werden. Die Sol-Gel-Außenschicht 22 kann dazu im Vergleich zur Sol-Gel-Schicht 18 dünn, beispielsweise 2 µm dick, ausgebildet sein.

Um die elektrische Leitfähigkeit an den der Außenseite AS zugewandten Stirnseiten der Durchkontaktierungen 20 sicherzustellen, können abschließend die Schutzschichten 24, beispielsweise abrasiv und insbesondere mit Ausnahme des Rands 32 (Fig. 6), von der Sol-Gel-Außenschicht 22 befreit werden.

Denkbar ist auch, vor Aufbringen der Sol-Gel-Außenschicht 22 die Schutzschicht 24 mit einem Schutzlack, insbesondere mit Ausnahme des Rands 32, abzudecken. Nach Abschluss der Ausbildung der Sol-Gel-Außenschicht 22 kann dann der Schutzlack entfernt werden.

Soll die Leitfähigkeit der Sol-Gel-Schicht 18 verbessert werden, so können vor dem Sol-Gel-Prozess leitfähige Partikel 28, beispielsweise Silberpartikel und/oder Kohlenstoffpartikel, dem Grundmaterial der Sol-Gel-Schicht 18 beigemischt werden.

Die Reihenfolge der oben beschriebenen Schritte a), b) und c) lässt sich weitgehend frei wählen. Insbesondere ist alternativ zur Herstellung der Durchkontaktierungen 20 durch Herstellung von Löchern in der Sol-Gel-Schicht 18 auch denkbar, die Durchkontaktierungen 20 auf der Kontaktvermittlungsschicht 16 und/oder auf dem Substrat 14 aufzubauen. Insbesondere ist denkbar, durch Leiterplattentechnologien, durch Lasersintern und/oder durch punktuelles Diffusionsverschweißen bzw. Widerstandsschweißen, beispielsweise einer Goldfolie, die Durchkontaktierungen 20 aufzubauen. Um die Schutzschicht 24 dann von der Sol-Gel-Schicht 18 bzw. der Sol-Gel-Außenschicht 22 freizuhalten, kann auch bei einem solchen Vorgehen ein Schutzlack analog zur vorangehend geschilderten Vorgehensweise zunächst aufgebracht und abschließend wieder entfernt werden.

### Bezugszeichenliste

- 10: Verteilerplatte
- 12: Kanalvertiefung
- 14: Substrat
- 15: Beschichtung
- 16: Kontaktvermittlungsschicht
- 18: Sol-Gel-Schicht
- 20: Durchkontaktierung
- 20a: Kupferschicht
- 20b: Nickelschicht
- 22: Sol-Gel-Außenschicht
- 24: Schutzschicht
- 25: Innenbereich
- 26: Kontaktbereich
- 28: Partikel
- 30: Kontaktschicht
- 32: Rand
- 100: Verfahren

- AS: Außenseite
- IS: Innenseite

- A-A: Schnittlinie

## Patentansprüche

1. **Beschichtung** (15) für ein zu beschichtendes Substrat (14) einer Verteilerplatte (10), wobei die Beschichtung (15) eine Innenseite (IS) zur Kontaktierung des Substrats (14) der Verteilerplatte (10) und eine der Innenseite (IS) abgewandte Außenseite (AS) aufweist, umfassend eine Sol-Gel-Schicht (18), wobei die Sol-Gel-Schicht (18) eine Vielzahl durch sie hindurch reichender, elektrisch leitender Durchkontaktierungen (20) aufweist, wobei wenigstens eine der Durchkontaktierungen (20) auf einer der Außenseite (AS) zugewandten Seite der Sol-Gel-Schicht (18) mit einer edelmetallhaltigen Schutzschicht (24) abgedeckt ist und wobei die wenigstens eine der Durchkontaktierungen (20) mit einer Kontaktvermittlungsschicht (16) elektrisch leitend verbunden und mit dem Substrat (14) über die Kontaktvermittlungsschicht (16) elektrisch leitend verbunden ist.

2. Beschichtung nach dem vorhergehenden Anspruch, **dadurch gekennzeichnet, dass** die Beschichtung (15) an ihrer Außenseite (AS) wenigstens bereichsweise zur Sol-Gel-Schicht (18) hin eine zusätzliche Sol-Gel-Außenschicht (22) aufweist.

3. Beschichtung nach einem der vorhergehenden Ansprüche, **dadurch gekennzeichnet, dass** das Grundmaterial der Sol-Gel-Schicht (18) und/oder das Grundmaterial der Sol-Gel-Außenschicht (22) SiO₂, TᵢO₂, HfO₂, ZrO₂, Al₂O₃, SnO₂, Ta₂O₅, Nb₂O₅, MoO₂, IrO₂ und/oder RuO₂ aufweisen.

4. Beschichtung nach einem der vorhergehenden Ansprüche, **dadurch gekennzeichnet, dass** die Sol-Gel-Schicht (18) elektrisch leitfähige Partikel (28) aufweist.

5. Beschichtung nach einem der vorhergehenden Ansprüche, **dadurch gekennzeichnet, dass** die Schutzschicht (24) wenigstens einer der Durchkontaktierungen (20) Gold, Ruthenium, Rhodium, Platin, Iridium, Palladium, Osmium und/oder eine Legierung mit wenigstens einem dieser Metalle aufweist.

6. Beschichtung nach einem der vorhergehenden Ansprüche, **dadurch gekennzeichnet, dass** wenigstens eine der Durchkontaktierungen (20) Silber, Nickel, Kupfer, Zink, Palladium, Platin und/oder eine Legierung mit wenigstens einem dieser Metalle aufweist.

7. Beschichtung nach einem der vorhergehenden Ansprüche, **dadurch gekennzeichnet, dass** die Kontaktvermittlungsschicht (16) zumindest bereichsweise eine Zinkschicht, eine Eloxalschicht und/oder eine kupferbasierte Schicht aufweist.

8. Beschichtung nach einem der vorhergehenden Ansprüche, **dadurch gekennzeichnet, dass** die Durchkontaktierungen (20) wenigstens 3 Prozent und höchstens 80 Prozent der außenseitigen Oberfläche der Sol-Gel-Schicht (18) einnehmen.

9. **Verteilerplatte** (10) einer Elektrolysevorrichtung, einer Brennstoffzelle und/oder eines elektrochemischen Energiespeichers, **dadurch gekennzeichnet, dass** die Verteilerplatte (10) ein Substrat (14) umfasst, das wenigstens bereichsweise eine Beschichtung (15) nach einem der vorhergehenden Ansprüche aufweist.

10. Verteilerplatte nach dem vorhergehenden Anspruch, **dadurch gekennzeichnet, dass** das Substrat (14) aluminiumbasiert ist.

11. **Brennstoffzelle, dadurch gekennzeichnet, dass** die Brennstoffzelle wenigstens eine Verteilerplatte (10) nach einem der beiden vorhergehenden Ansprüche umfasst.

12. **Verfahren** (100) zur Beschichtung eines Substrats (14) einer Verteilerplatte (10) mit einer Beschichtung (15), insbesondere einer Beschichtung (15) nach einem der Ansprüche 1 bis 8, umfassend die Schritte:
a) Aufbringen einer Kontaktvermittlungsschicht (16) auf das Substrat (14)
b) Aufbringen einer Sol-Gel-Schicht (18) auf das Substrat (14) und/oder die Kontaktvermittlungsschicht (16) und
c) Herstellen von Durchkontaktierungen (20) durch die Sol-Gel-Schicht (18), wobei wenigstens eine der Durchkontaktierungen (20) auf einer der Außenseite (AS) zugewandten Seite der Sol-Gel-Schicht (18) mit einer edelmetallhaltigen Schutzschicht (24) abgedeckt ist, und wobei die wenigstens eine der Durchkontaktierungen (20) mit der Kontaktvermittlungsschicht (16) elektrisch leitend verbunden und mit dem Substrat (14) über die Kontaktvermittlungsschicht (16) elektrisch leitend verbunden ist.

13. Verfahren nach dem vorhergehenden Anspruch, **dadurch gekennzeichnet, dass** auf die Sol-Gel-Schicht (18) außenseitig zumindest bereichsweise eine Sol-Gel-Außenschicht (22) aufgebracht wird.

14. Verfahren nach einem der Ansprüche 12 oder 13, **dadurch gekennzeichnet, dass** die Schutzschicht (24) wenigstens einer der Durchkontaktierungen (20) temporär abgedeckt wird und/oder dass die Schutzschicht (24) wenigstens einer der Durchkontaktierungen (20) von Fremdstoffen und/oder der Sol-Gel-Außenschicht (22) befreit wird.

15. Verfahren nach einem der vorhergehenden Ansprüche 12 bis 14, **dadurch gekennzeichnet, dass** die Durchkontaktierungen (20) gemäß Schritt c) vor dem Aufbringen der Sol-Gel-Schicht (18) gemäß Schritt b) hergestellt werden.

## Claims

1. **Coating** (15) for a substrate (14) to be coated of a distributor plate (10), wherein the coating (15) has an inner face (IS) for contacting the substrate (14) of the distributor plate (10) and an outer face (AS) facing away from the inner face (IS), comprising a sol-gel layer (18), wherein the sol-gel layer (18) has a plurality of electrically conductive vias (20) extending therethrough, wherein at least one of the vias (20) on a face of the sol-gel layer (18) facing the outer face (AS) is covered with a protective layer (24) containing noble metal and wherein the at least one of the vias (20) is electrically conductively connected to a contact-making layer (16) and is electrically conductively connected to the substrate (14) via the contact-making layer (16).

2. Coating according to the preceding claim, **characterized in that** the coating (15) has an additional sol-gel outer layer (22) on its outer face (AS) at least in regions towards the sol-gel layer (18).

3. Coating according to either of the preceding claims, **characterized in that** the base material of the sol-gel layer (18) and/or the base material of the sol-gel outer layer (22) comprise SiO₂, TᵢO₂, HfO₂, ZrO₂, Al₂O₃, SnO₂, Ta₂O₅, Nb₂O₅, MoO₂, IrO₂ and/or R_{U}O₂.

4. Coating according to any of the preceding claims, **characterized in that** the sol-gel layer (18) has electrically conductive particles (28).

5. Coating according to any of the preceding claims, **characterized in that** the protective layer (24) of at least one of the vias (20) comprises gold, ruthenium, rhodium, platinum, iridium, palladium, osmium and/or an alloy with at least one of these metals.

6. Coating according to any of the preceding claims, **characterized in that** at least one of the vias (20) comprises silver, nickel, copper, zinc, palladium, platinum and/or an alloy with at least one of these metals.

7. Coating according to any of the preceding claims, **characterized in that** the contact-making layer (16) comprises, at least in regions, a zinc layer, an anodized layer and/or a copper-based layer.

8. Coating according to any of the preceding claims, **characterized in that** the vias (20) take up at least 3 percent and at most 80 percent of the outside surface of the sol-gel layer (18).

9. **Distributor plate** (10) of an electrolysis device, a fuel cell and/or an electrochemical energy store, **characterized in that** the distributor plate (10) comprises a substrate (14) which has, at least in regions, a coating (15) according to any of the preceding claims.

10. Distributor plate according to the preceding claim, **characterized in that** the substrate (14) is aluminum-based.

11. **Fuel cell, characterized in that** the fuel cell comprises at least one distributor plate (10) according to either of the two preceding claims.

12. **Method** (100) for coating a substrate (14) of a distributor plate (10) with a coating (15), in particular a coating (15) according to any of claims 1 to 8, comprising the following steps:
a) applying a contact-making layer (16) to the substrate (14)
b) applying a sol-gel layer (18) to the substrate (14) and/or the contact-making layer (16) and
c) producing vias (20) through the sol-gel layer (18), wherein at least one of the vias (20) on a face of the sol-gel layer (18) facing the outer face (AS) is covered with a protective layer (24) containing noble metal, and wherein the at least one of the vias (20) is electrically conductively connected to the contact-making layer (16) and is electrically conductively connected to the substrate (14) via the contact-making layer (16).

13. Method according to the preceding claim, **characterized in that** a sol-gel outer layer (22) is applied to the outside of the sol-gel layer (18) at least in regions.

14. Method according to either claim 12 or claim 13, **characterized in that** the protective layer (24) of at least one of the vias (20) is temporarily covered and/or **in that** the protective layer (24) of at least one of the vias (20) is freed from foreign substances and/or the sol-gel outer layer (22).

15. Method according to any of the preceding claims 12 to 14, **characterized in that** the vias (20) are produced according to step c) before the application of the sol-gel layer (18) according to step b).

## Revendications

1. **Revêtement** (15) destiné à un substrat à revêtir (14) d'une plaque de distribution (10), le revêtement (15) présentant un côté intérieur (IS) permettant la mise en contact du substrat (14) de la plaque de distribution (10) et un côté extérieur (AS) détourné du côté intérieur (IS), comprenant une couche sol-gel (18), la couche sol-gel (18) présentant une pluralité de trous métallisés électriquement conducteurs (20) traversant celle-ci, au moins l'un des trous métallisés (20), sur un côté de la couche sol-gel (18) faisant face au côté extérieur (AS), étant recouvert d'une couche de protection (24) contenant des métaux précieux et l'au moins un des trous métallisés (20) étant connecté de façon électriquement conductrice à une couche promotrice de contact (16) et étant connecté au substrat (14) de façon électriquement conductrice par l'intermédiaire de la couche promotrice de contact (16).

2. Revêtement selon la revendication précédente, **caractérisé en ce que** le revêtement (15) présente, sur son côté extérieur (AS), une couche extérieure sol-gel supplémentaire (22) au moins dans certaines zones près de la couche sol-gel (18).

3. Revêtement selon l'une des revendications précédentes, **caractérisé en ce que** le matériau de base de la couche sol-gel (18) et/ou le matériau de base de la couche extérieure sol-gel (22) présentent du SiO₂, TiO₂, HfO₂, ZrO₂, Al₂O₃, SnO₂, Ta₂O₅, Nb₂O₅, MoO₂, IrO₂ et/ou RuO₂.

4. Revêtement selon l'une des revendications précédentes, **caractérisé en ce que** la couche sol-gel (18) présente des particules électriquement conductrices (28).

5. Revêtement selon l'une des revendications précédentes, **caractérisé en ce que** la couche de protection (24) d'au moins l'un des trous métallisés (20) présente de l'or, du ruthénium, du rhodium, du platine, de l'iridium, du palladium, de l'osmium et/ou un alliage comportant au moins l'un de ces métaux.

6. Revêtement selon l'une des revendications précédentes, **caractérisé en ce qu'**au moins l'un des trous métallisés (20) présente de l'argent, du nickel, du cuivre, du zinc, du palladium, du platine et/ou un alliage comportant au moins l'un de ces métaux.

7. Revêtement selon l'une des revendications précédentes, **caractérisé en ce que** la couche promotrice de contact (16) présente, au moins dans certaines zones, une couche de zinc, une couche anodisée et/ou une couche à base de cuivre.

8. Revêtement selon l'une des revendications précédentes, **caractérisé en ce que** les trous métallisés (20) occupent au moins 3 pour cent et au plus 80 pour cent de la surface côté extérieur de la couche sol-gel (18).

9. **Plaque de distribution** (10) d'un appareil d'électrolyse, d'une pile à combustible et/ou d'un accumulateur d'énergie électrochimique, **caractérisée en ce que** la plaque de distribution (10) comprend un substrat (14) qui présente, au moins dans certaines zones, un revêtement (15) selon l'une des revendications précédentes.

10. Plaque de distribution selon la revendication précédente, **caractérisée en ce que** le substrat (14) est à base d'aluminium.

11. **Pile à combustible, caractérisée en ce que** la pile à combustible comprend au moins une plaque de distribution (10) selon l'une des deux revendications précédentes.

12. **Procédé** (100) de revêtement d'un substrat (14) d'une plaque de distribution (10) au moyen d'un revêtement (15), en particulier d'un revêtement (15) selon l'une des revendications 1 à 8, comprenant les étapes :
a) d'application d'une couche promotrice de contact (16) sur le substrat (14)
b) d'application d'une couche sol-gel (18) sur le substrat (14) et/ou la couche promotrice de contact (16) et
c) de fabrication de trous métallisés (20) à travers la couche sol-gel (18), au moins l'un des trous métallisés (20) étant recouverts, sur un côté de la couche sol-gel (18) faisant face au côté extérieur (AS), d'une couche de protection (24) contenant des métaux précieux, et l'au moins un des trous métallisés (20) étant connecté de façon électriquement conductrice à la couche promotrice de contact (16) et étant connecté de façon électriquement conductrice au substrat (14) par l'intermédiaire de la couche promotrice de contact (16).

13. Procédé selon la revendication précédente, **caractérisé en ce qu'**une couche extérieur sol-gel (22) est appliquée à la couche sol-gel (18) côté extérieur au moins dans certaines zones.

14. Procédé selon l'une des revendications 12 ou 13, **caractérisé en ce que** la couche de protection (24) d'au moins l'un des trous métallisés (20) est recouverte temporairement et/ou **en ce que** la couche de protection (24) d'au moins l'un des trous métallisés (20) est rendue exempte de substances étrangères et/ou de la couche extérieure sol-gel (22).

15. Procédé selon l'une des revendications 12 à 14 précédentes, **caractérisé en ce que** les trous métallisés (20) selon l'étape c) sont fabriqués avant l'application de la couche sol-gel (18) selon l'étape b).
